# EUROPEAN PATENT APPLICATION

(11) **EP 2 574 808 A2**
(43) Date of publication of application: **03.04.2013**
(21) Application number: 12185706.4
(22) Date of filing: 24.09.2012
(51) Int. Cl.: F16D 1/095

(54) **One-piece coupling for a wind turbine drive shaft**

(30) Priority: 29.09.2011 US 201113248403
(71) Applicant: General Electric Company, Schenectady, NY 12345 (US)
(72) Inventor: Kaura, Harvey H., Greenville, SC South Carolina 29615 (US); Thomason, Scott Denton, Greenville, SC South Carolina 29615 (US)
(74) Representative: Bedford, Grant Richard

(57) **Abstract**

A coupling arrangement 40 is provided for connecting shaft components 42, 50, for example drivetrain components of a wind turbine. The coupling arrangement 40 includes a first shaft component 42 having an end with a recess defined therein, and a second shaft component 50 axially aligned with the first shaft component and seated within the recess. The first shaft component 42 has an outer diameter surface in a region concentric with the recess. A single-piece clamping disk 52 has a matching inner diameter surface and a circumferentially extending groove defined in the inner diameter surface, as well as a radially extending injection channel defined between an outer diameter surface of the clamping disk and the groove. Upon application of pressurized fluid into the injection channel, the clamping disk 52 radially expands for sliding movement of the clamping disk along the outer diameter surface from a release position to a locking position. Upon release of fluid pressure, the clamping disk 52 radially retracts and clamps onto the outer diameter surface to couple the second shaft component 50 within the recess of the first shaft component 42.

## Description

The present invention relates generally to a coupling between rotating components in a wind turbine, and more particularly to a single-piece clamping disk that may be used, for example, to couple a wind turbine drive shaft to a gearbox shaft or directly to a generator.

Compression or shrink couplings (also known as "shrink disks") are widely used in drive trains to couple a rotating shaft to another component, such as a gearbox or generator. In many conventional wind turbine designs, for example, a shrink coupling is used to secure the main drive shaft ("low speed shaft") to the gearbox. This coupling can be quite large, often weighing in the range of about 2,000 lbs, and various maintenance procedures require removal and subsequent attachment of the shrink coupling. For example, inspection or replacement of the low speed shaft seal (also referred to as the "front seal") in the gearbox can only be accomplished with removal of the shrink coupling.

Wind power is considered one of the cleanest, most environmentally friendly energy sources presently available, and wind turbines have gained increased attention in this regard. Modem wind turbines can be quite large, with many designs having a rotor height exceeding 100 meters. However, the cost/benefit economics of wind energy is a constant consideration. The cost of producing the energy, including construction and maintenance of the wind turbines, cannot outweigh the benefits. In this regard, efforts are continuously being made to provide reliable, less complicated and more economical components for wind turbines.

Accordingly, the industry would benefit from an improved, secure coupling between the main drive shaft and gearbox shaft, as well as between any other coupled shafts, in any manner of wind turbine configuration.

Various aspects and advantages of the invention will be set forth in part in the following description, or may be clear from the description, or may be learned through practice of the invention.

In accordance with aspects of the invention, a coupling arrangement is provided for connecting drivetrain components of a wind turbine. The coupling arrangement includes a first shaft component having an end with a recess defined therein, and a second shaft component axially aligned with the first shaft component and seated within the recess. The first shaft component has an outer diameter surface in a region concentric with the recess. This concentric outer diameter surface may be tapered. A single-piece clamping disk is disposed around the first shaft component and includes an inner diameter surface with a configuration that matches the concentric outer diameter surface of the first shaft component. The clamping disk includes a circumferentially extending groove defined in the inner diameter surface, as well as at least one radially extending injection channel defined between an outer diameter surface of the clamping disk and the groove. With this configuration, upon application of a pressurized fluid into the injection channel, the clamping disk radially expands and permits sliding movement of the clamping disk along the concentric outer diameter surface of the first shaft component from a release position to a locking position. Upon release of fluid pressure, the clamping disk radially retracts and clamps onto the outer diameter surface to couple the second shaft component within the recess of the first shaft component.

In one embodiment, the first shaft component may be an input shaft to a gearbox or generator, and the second shaft component may be a main drive shaft from the wind turbine rotor. In a different embodiment, the components may be reversed such that the first shaft component is the main drive shaft and the second shaft component is the input shaft to the gearbox.

In a further aspect, the present invention also encompasses any manner of wind turbine that having a coupling arrangement as discussed above. For example, an exemplary wind turbine includes a rotor with a main drive shaft coupled thereto. The main drive shaft is rotationally coupled to an input shaft of a gearbox with a coupling arrangement that includes a recess defined in one of the main drive shaft or the gearbox input shaft, wherein the other of the input shaft or main drive shaft has an end coaxially seated within the recess. An outer diameter surface, which may be a tapered surface, is defined on the radially outboard component having the recess defined therein. A single-piece clamping disk is disposed around the outboard component and includes an inner diameter surface that matches the configuration of the outer diameter surface of the shaft component. The clamping disk includes a circumferentially extending groove defined in the inner diameter surface, as well as at least one radially extending injection channel defined between an outer diameter surface of the clamping disk and the groove. As discussed above, upon application of a pressurized fluid into the injection channel, the clamping disk radially expands for sliding movement of the clamping disk along the tapered outer diameter surface from a release position to a locking position, and upon release of fluid pressure the clamping disk radially retracts and clamps onto the tapered outer diameter surface to rotationally couple the main drive shaft to the input shaft.

Although aspects of the invention will be described herein as they relate to an improved coupling configuration between a main drive shaft and a gearbox shaft in a wind turbine, it should be appreciated that this is for purposes of illustrating particular useful embodiments of the present coupling. The invention is not limited to use in wind turbines, and is applicable in any situation that requires a secure coupling between aligned rotating shafts. For example, a coupling arrangement for rotationally connecting axially aligned shaft components may include a first shaft component having an end with a recess defined therein, and a second shaft component axially aligned with the first shaft component and seated within the recess. The first shaft component includes an outer diameter surface, which may be a tapered surface, in a region concentric with the recess. A single-piece clamping disk is disposed around the first shaft component and has an inner diameter surface engages against the outer diameter surface of the first shaft component, as well as a circumferentially extending groove defined in the inner diameter surface. The clamping disk further includes a radially extending injection channel defined between an outer diameter surface of the disk and the groove. Upon application of a pressurized fluid into the injection channel, the clamping disk radially expands for sliding movement of the clamping disk along the outer diameter surface of the shaft component from a release position to a locking position. Upon release of fluid pressure, the clamping disk radially retracts and clamps onto the outer diameter surface to couple the second shaft component within the recess of the first shaft component.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
Fig. 1 is a perspective view of a wind turbine that may incorporate a coupling in accordance with aspects of the invention;
Fig. 2 is a cross-sectional view of an embodiment of a coupling arrangement in accordance with aspects of the invention;
Figs. 3 to 6 are cross-sectional sequential operational views of an embodiment of a coupling arrangement; and
Fig. 7 is an axial cross-sectional view of an embodiment of a coupling arrangement.

Reference now will be made in detail to embodiments of the invention, one or more examples of which are illustrated in the drawings. Each example is provided by way of explanation of the invention, and not as a limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention covers such modifications and variations as come within the scope of the appended claims and their equivalents.

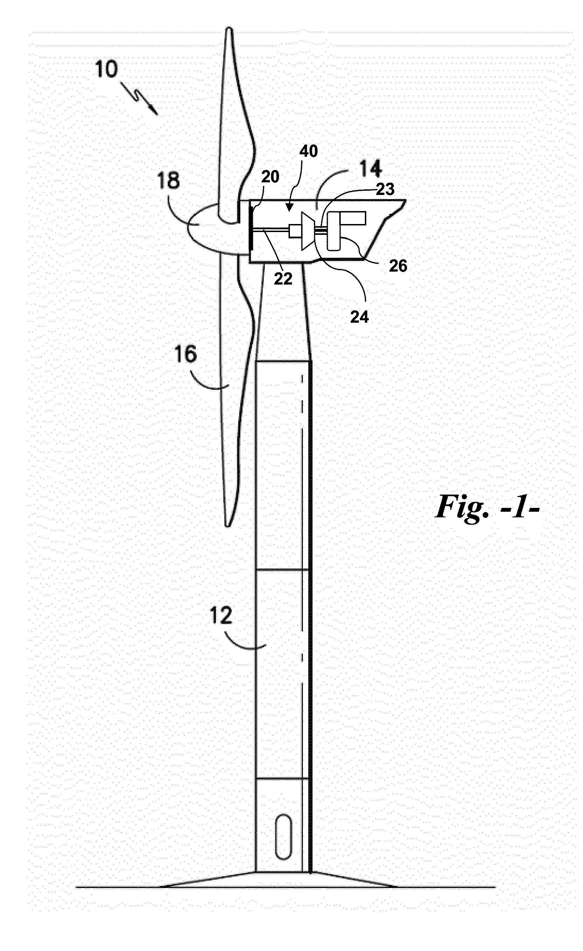

Fig. 1 illustrates a wind turbine 10 of conventional construction. The wind turbine 10 includes a tower 12 with a nacelle 14 mounted thereon. A plurality of turbine blades 16 are mounted to a rotor hub 18, which is in turn connected to a main flange 20 that turns a main rotor shaft 22. The main rotor shaft 22 is coupled to a gearbox 24 via a coupling arrangement 40, as described in greater detail below. The gearbox 24 is connected to a generator 26 via a high speed shaft 23. The blades 16 convert motive force of wind into rotational mechanical energy via the shaft 22 and gearbox 24 to generate electricity with the generator 26.

It should be appreciated that any manner of wind turbine configuration may incorporate a coupling 40 in accordance with aspects of the invention, and that the type of wind turbine 10 depicted in Fig. 1 is for illustrative purposes only. For example, the wind turbine 10 may be a direct-drive wind turbine wherein the rotor hub18 output is directly coupled to the generator 26 with a coupling 40 as described herein.

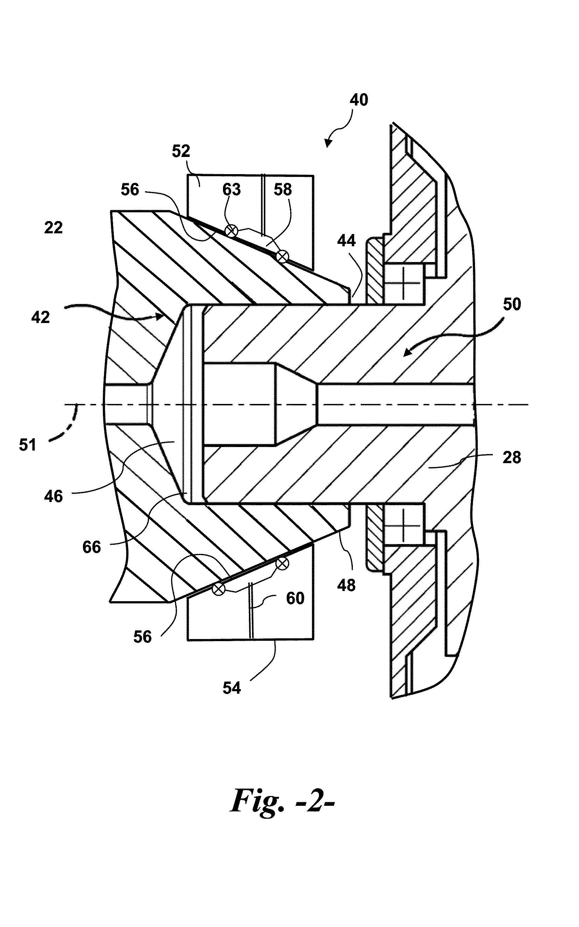

Fig. 2 illustrates an embodiment of a coupling arrangement 40 that may be utilized for connecting axially aligned shaft components, for example shaft components within the wind turbine 10 (Fig. 1). For example, the coupling arrangement 40 may be utilized for connecting a main drive shaft 22 to a gearbox input shaft 28. The coupling arrangement 40 includes a first shaft component 42 having an end 44 with a recess 46 defined therein. In a certain embodiment, the first shaft component 42 is a main drive shaft 22 of a wind turbine drive train (Fig. 1).

The coupling arrangement 40 includes a second shaft component 50 that is axially aligned with the first shaft component 42 along the axis 51. The second shaft component 50 is seated within the recess 46.

The first shaft component 42 includes an outer diameter surface 48 in a region that is generally concentric (radially outboard) with the recess 46, as illustrated in Fig. 2. This outer diameter surface 48 may have various profiles, including a flat profile that is parallel to the axis 51, or a profile that is angled or changes axial direction relative to the axis 51. In a particular embodiment illustrated in the figures, the outer diameter surface 48 is tapered in the radial direction relative to the axis 51.

The coupling arrangement 40 includes a single-piece clamping disk, generally 52, that is disposed around the first shaft component 42 generally concentric to the recess 46. The clamping disk 52 has an inner diameter surface 56 disposed opposite from the outer diameter surface 48 of the first shaft component 42. The inner diameter surface 56 has a profile that "matches" or corresponds to the profile of the outer diameter surface 48 such that the surfaces engage generally uniformly along the length of the respective surfaces with radial retraction of the clamping disk 52. For example, as depicted in Fig. 2, the inner diameter surface 56 has a tapered profile that matches the tapered profile of the outer diameter surface 48. A circumferentially extending fluid-conducting groove or channel 58 is defined in the inner diameter surface 56 of the clamping disk 52. At least one radially extending injection channel 60 is defined between the outer diameter surface 54 of the clamping disk 52 and the groove 58. The injection channel 60 provides a fluid pathway for a pressurized fluid to be injected into the groove 58.

In the embodiment of Fig. 2, the second shaft component 50 is illustrated as an input shaft 28 to a gearbox 24 (Fig. 1). The input shaft 28 is seated within the recess 46 in the main drive shaft component 22 up to a point that may be defined by a shoulder within the recess 46, a tapered fit between the shaft component 28 and recess 46, or any other type of engaging structure (denoted generally as 66 in Fig. 2) that defines the limit of insertion of the gearbox input shaft 28 within the recess 46.

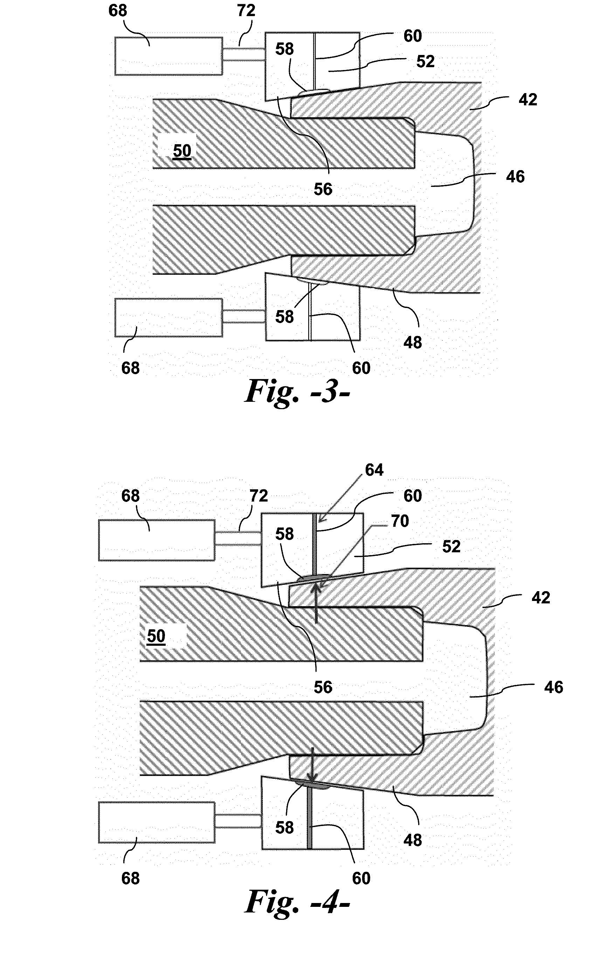

Fig. 3 illustrates an embodiment wherein the orientation of the first shaft component 42 and second shaft component 50 is reversed as compared to the configuration of Fig. 2. In this embodiment, for example, the first shaft component 42 may be the gearbox input shaft, while the second shaft component 50 may be the main drive shaft of a wind turbine configuration wherein the main drive shaft is disposed within the recess 46 of a gearbox input shaft. In Fig. 3, the clamping disk 52 is illustrated in an initial release position relative to the tapered outer diameter surface 48. One or more motive devices 68 are provided for moving the clamping disk 52 in an axial direction relative to the shaft components 42, 50. The motive devices 68 may be, for example, hydraulically driven devices that actuate rams 72. Any manner of appropriate motive device may be provided for this purpose, including electric motors, pneumatic devices, and so forth. It should be appreciated that the invention is not limited to any particular means or device for actuating the clamping disk 52.

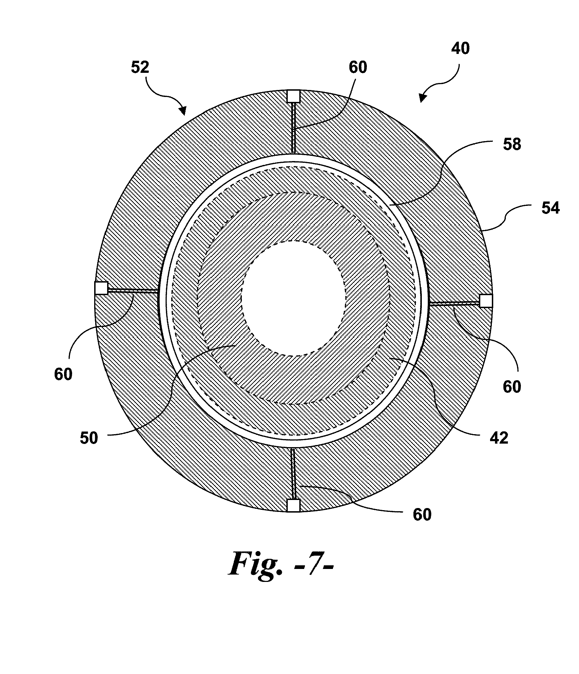

It should be appreciated that any number and pattern of the injection channels 60 may be provided around the clamping disk 52. For example, referring to Fig. 7, a plurality of the injection channels 60 are circumferentially spaced around the outer diameter surface 54 of the clamping disk 52. In an alternate embodiment, a single injection channel 60 may be utilized.

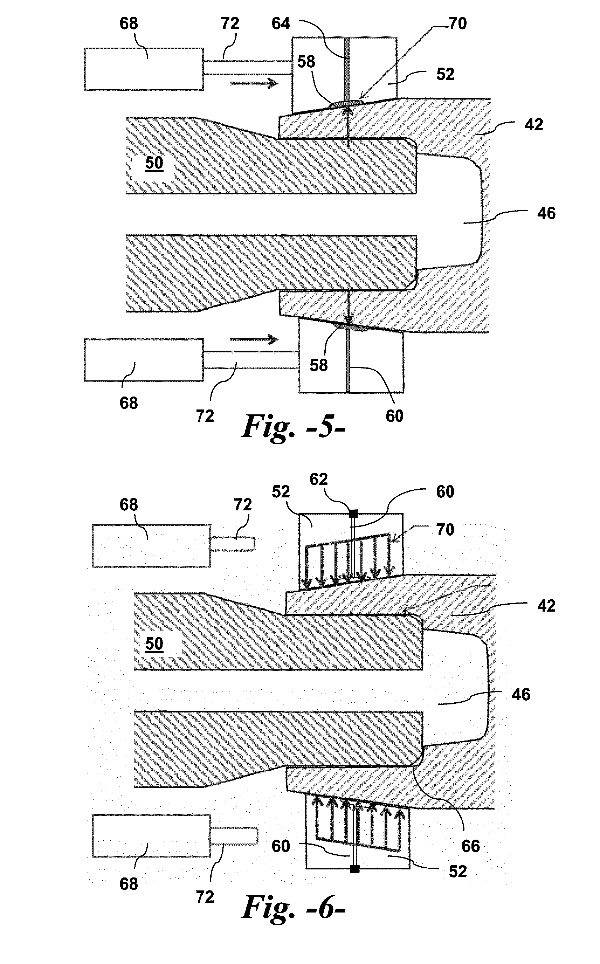

Referring to Fig. 4, a pressurized fluid 64 is introduced into the injection channel 60 from any suitable pressurized fluid source. Any suitable seal 63 (Fig. 2) may be provided along the opposite sides of the groove 58 to limit leakage of the pressurized fluid during the coupling process, including a compressible seal, labyrinth seal, metallic seals, and so forth. In addition, a suitable seal may be obtained by shaping the opposed machined faces of the groove 58 and the clamping disk 52. The pressurized fluid fills the internal groove 58 and is applied with sufficient pressure to generate radial expansion of the clamping disk 52 relative to the tapered surface 48 of the first shaft component 42, as indicated by the radial force lines 70 in Fig. 4. The fluid 64 is maintained under pressure while the motive device 68 is actuated to drive the clamping disk 52 along the tapered outer diameter surface 48, as indicated by the arrows in Fig. 5. The motive member 68 positions the clamping disk 52 to a locking position along the outer diameter surface 48 as the pressurized fluid maintains the clamping disk in its radially expanded state, as indicated by the force lines 70 in Fig. 5.

Once the clamping disk 52 has been positioned to its locking position as indicated in Fig. 6, release of the fluid pressure on the disk 52 causes the clamping disk to radially retract and clamp against the outer diameter surface 48, as indicated by the force lines 70 in Fig. 6. The injection channel 60 may be capped with any manner of suitable plug 62 to retain the fluid within the channel 60 and groove 58. Alternatively, the fluid may be drained from the channels and groove 58. The motive member 68 and associated ram 72 may be disengaged from the clamping disk 52 at this time.

Although the coupling arrangement 40 is described herein as a device for coupling a main drive shaft to a gearbox or generator input shaft in a wind turbine drive train, it should be readily appreciated that the coupling arrangement 40 may be utilized to couple any type of axially aligned shafts, and that the invention is not limited to the wind turbine drive train configuration illustrated and described herein.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art.

## Claims

1. A coupling arrangement (40) for connecting drivetrain components of a wind turbine, said coupling arrangement comprising:
a first shaft component (42) having an end with a recess defined therein,
a second shaft component (50) axially aligned with said first shaft component and seated within said recess;
said first shaft component (42) comprising an outer diameter surface in a region concentric with said recess;
a single-piece clamping disk (52) having an inner diameter surface and a circumferentially extending groove defined in said inner diameter surface, said clamping disk (52) further comprising a radially extending injection channel defined between an outer diameter surface and said groove; and
wherein said upon application of a pressurized fluid into said injection channel, said clamping disk (52) radially expands for sliding movement of said clamping disk along said outer diameter surface of said first shaft component (42) from a release position to a locking position, and upon release of fluid pressure said clamping disk (52) radially retracts and clamps onto said outer diameter surface of said first shaft component (42) to couple said second shaft component (50) within said recess of said first shaft component.

2. The coupling arrangement (40) of claim 1, wherein said coupling arrangement is configured between a main drive shaft and a gearbox input shaft, or between a main drive shaft and a generator input shaft.

3. The coupling arrangement (40) of any preceding claim, further comprising structure defined at an end of said recess against which said second shaft component (50) abuts, said tapered outer diameter surface of said first shaft component extending axially generally to said structure.

4. The coupling arrangement (40) of any preceding claim, comprising a plurality of said injection channels circumferentially spaced around said clamping disk (52).

5. The coupling arrangement (40) of any preceding claim, wherein said outer diameter surface of said first shaft component (42) and said inner diameter surface of said clamping disk (52) are tapered in a radial direction relative to a longitudinal axis of said coupling arrangement.

6. A wind turbine (10), comprising:
a rotor;
a main drive shaft coupled to said rotor;
a gearbox (24) or generator having an input shaft;
a coupling arrangement (40) configured between said main drive shaft and said input shaft, said coupling arrangement further comprising:
a recess (46) defined in one of said main drive shaft or said input shaft, wherein the other of said input shaft or main drive shaft has an end coaxially seated within said recess;
an outer diameter surface defined on the one of said main drive shaft or said input shaft having said recess defined therein;
a single-piece clamping disk (52) having an inner diameter surface and a circumferentially extending groove defined in said inner diameter surface, said clamping disk further comprising a radially extending injection channel defined between an outer diameter surface of said clamping disk (52) and said groove; and
wherein said upon application of a pressurized fluid into said injection channel, said clamping disk (52) radially expands for sliding movement of said clamping disk along said outer diameter surface from a release position to a locking position, and upon release of fluid pressure said clamping disk radially retracts and clamps onto said outer diameter surface to rotationally couple said main drive shaft to said input shaft.

7. The wind turbine (10) of claim 6, wherein said recess is defined in said input shaft and said main drive shaft is coaxially seated within said recess.

8. The wind turbine (10) of claim 6 or claim 7, comprising a plurality of said injection channels circumferentially spaced around said clamping disk.

9. The wind turbine (10) of any of claims 6 to 8, wherein said outer diameter surface and said inner diameter surface of said clamping disk (52) are tapered in a radial direction relative to a longitudinal axis of said coupling arrangement.

10. A coupling arrangement (40) for rotationally connecting axially aligned shaft components, said coupling arrangement comprising:
a first shaft component (42) having an end with a recess defined therein,
a second shaft component (50) axially aligned with said first shaft component and seated within said recess;
said first shaft component (42) comprising an outer diameter surface in a region concentric with said recess;
a single-piece clamping disk (52) having an inner diameter surface and a circumferentially extending groove defined in said inner diameter surface, said clamping disk further comprising a radially extending injection channel defined between an outer diameter surface and said groove; and
wherein said upon application of a pressurized fluid into said injection channel, said clamping disk (52) radially expands for sliding movement of said clamping disk along said outer diameter surface from a release position to a locking position, and upon release of fluid pressure said clamping disk radially retracts and clamps onto said outer diameter surface to couple said second shaft component (50) within said recess of said first shaft component (42).

11. The coupling arrangement (40) of claim 10, wherein said coupling arrangement is configured between a main drive shaft and a gearbox input shaft, or between a main drive shaft and a generator input shaft.

12. The coupling arrangement (40) of claim 10 or claim 11, further comprising structure defined at an end of said recess against which said second shaft component (50) abuts, said tapered outer diameter surface of said first shaft component extending axially generally to said structure.

13. The coupling arrangement (40) of any of claims 10 to 12, comprising a plurality of said injection channels circumferentially spaced around said clamping disk (52).

14. The coupling arrangement (40) of any of claims 10 to 13, wherein said outer diameter surface of said first shaft component and said inner diameter surface of said clamping disk are tapered in a radial direction relative to a longitudinal axis of said coupling arrangement.
